# EUROPEAN PATENT SPECIFICATION

(11) **EP 3 392 786 B1**
(45) Date of publication and mention of the grant of the patent: **28.10.2020**
(21) Application number: 18158282.6
(22) Date of filing: 23.02.2018
(51) Int. Cl.: G06F 16/23, G06T 15/00

(54) **THREE-DIMENSIONAL MASSIVE MODEL VISUALIZATION DATABASE SYSTEM**
DATENBANKSYSTEM ZUR VISUALISIERUNG EINES DREIDIMENSIONALEN MASSIVEN MODELLS
SYSTÈME DE BASE DE DONNÉES DE VISUALISATION DE MODÈLE MASSIF TRIDIMENSIONNEL

(30) Priority: 17.04.2017 US 201715489045
(43) Date of publication of application: 24.10.2018
(73) Proprietor: The Boeing Company, Chicago, IL 60606-2016 (US)
(72) Inventor: TROY, James J., CHICAGO, IL Illinois 60606-1596 (US); MCGARRY, William D., CHICAGO, IL Illinois 60606-1596 (US); PRAZAK, Nikoli E., CHICAGO, IL Illinois 60606-1596 (US); SCIARRA, Michael Patrick, CHICAGO, IL Illinois 60606-1596 (US); KARAKUSEVIC, Vladimir, CHICAGO, IL Illinois 60606-1596 (US); GASS, John Carney, CHICAGO, IL Illinois 60606-1596 (US); WARD, William E., CHICAGO, IL Illinois 60606-1596 (US)
(74) Representative: Plasseraud IP

(56) References cited:
- EP-A1- 2 626 668
- EP-A2- 0 947 960
- US-A1- 2003 063 770
- US-A1- 2008 133 452
- US-A1- 2016 314 626
- US-B1- 6 493 720
- JUNJIE XUE ET AL: "Interactive Rendering and Modification of Massive Aircraft CAD Models in Immersive Environment", COMPUTER-AIDED DESIGN AND APPLICATIONS, vol. 12, no. 4, 4 July 2015 (2015-07-04), pages 393-402, XP055469318, US ISSN: 1686-4360, DOI: 10.1080/16864360.2014.997635

## Description

### BACKGROUND INFORMATION

### 1. Field:

The present disclosure relates generally to manufacturing, and in particular, to a method and apparatus for manufacturing vehicles using a three-dimensional massive model visualization system.

### 2. Background:

In manufacturing aircraft, large three-dimensional data sets, referred to here as three-dimensional massive model visualization data sets, are used to display three-dimensional models of an aircraft to users. A three-dimensional massive model visualization data set is a collection of three-dimensional models in vehicles, such as aircraft. The three-dimensional massive model visualization data sets may have a myriad of models for thousands to millions of parts for the vehicle.

The display of these three-dimensional massive model visualization data sets are often referred to as massive model visualizations (MMV). For example, a user may visualize different configurations of an aircraft in which these configurations are displayed using a three-dimensional massive model visualization data set of the aircraft of interest. Different options may be selected to display how different configurations would look.

Further, the three-dimensional massive model visualization data sets are also used in the manufacturing process for aircraft. With three-dimensional massive model visualization data sets, visualizations of the progress of the aircraft may be made to more effectively communicate information to engineers, managers, or other human operators involved in the manufacturing process.

For example, the assemblies in an aircraft may be displayed in a manner to show the state of assemblies for the aircraft at different times, as well as the current state of the aircraft. With this display, the human operator may quickly obtain an understanding of the assembly progress for a particular aircraft on a line.

Further, the three-dimensional massive model visualization data sets may be displayed to show the state of work orders for different assemblies. For example, the aircraft may be displayed with color coding or other graphic indicators to indicate the state of work orders for different assemblies. For example, color coding displayed with the assemblies to indicate the state of work orders, such as on time, delayed, completed, in progress, or other states of manufacture.

Three-dimensional massive model visualization of complex objects, such as aircraft, usually involve the display of large amounts of three-dimensional model geometry that may originate from many different storage locations. Locating and processing the three-dimensional model items needed for visualizing an aircraft may be a challenging and time-consuming process.

Three-dimensional massive model visualization data sets may be used to visualize complex objects such as aircraft. Three-dimensional massive model visualization data sets are pre-built, self-contained datasets that have been optimized to allow for high-performance interactive visualization of complex three-dimensional data.

Currently, the user locates the three-dimensional models needed to build a three-dimensional massive model visualization data set for a configuration that the user desires to see for an aircraft. The user then builds the three-dimensional massive model visualization data set on the user computer. This process requires the user to know how to configure the build process. Additionally, having available computing resources to process all the models and other data needed for a three-dimensional massive model visualization data set is also needed on a user computer.

Therefore, it would be desirable to have a method and apparatus that take into account at least some of the issues discussed above, as well as other possible issues. For example, it would be desirable to have a method and apparatus that overcome a technical problem with finding, building, and managing three-dimensional objects using three-dimensional massive model visualization data sets.
US2008/133452 discusses an information processor that includes: extraction means for extracting metadata from contents; first storage means for storing a candidate metadata list in which candidate metadata becoming candidates for typical metadata having higher extraction frequencies out of the extracted metadata and a first frequency at which the candidate metadata were extracted are interrelatedly stored; first updating means for adding the extracted metadata as the candidate metadata to the candidate metadata list, thus updating the candidate metadata list; second storage means for storing a typical metadata list in which the typical metadata and a second frequency at which the typical metadata were extracted are interrelatedly stored; and second updating means which, when the first frequency stored in the candidate metadata list is in excess of a given frequency, adds the candidate metadata associated with the first frequency as the typical metadata to the typical metadata list, thus updating the typical metadata list.
EP0947960 discusses an authoring system that provides a realistic rendering that may be updated and displayed continuously while simultaneously allowing full access to all authoring tools.
Document: JUNJIE XUE ET AL, "Interactive Rendering and Modification of Massive Aircraft CAD Models in Immersive Environment", COMPUTER-AIDED DESIGN AND APPLICATIONS, US, (20150704), vol. 12, no. 4, doi:10.1080/16864360.2014.997635, ISSN 1686-4360, pages 393 - 402, XP055469318 discusses a system for Interactive Rendering and Modification of Massive Aircraft CAD Models in Immersive Environment.

### SUMMARY

An embodiment of the present disclosure provides a method for managing three-dimensional massive model visualization data sets according to claim 1.

Another example useful for understanding the invention provides a method for displaying three-dimensional massive model visualization data sets on a client device. The method comprises displaying a vehicle list of vehicles displayable that are on the client device. The method downloads a three-dimensional massive model visualization data set in the three-dimensional massive model visualization data sets corresponding to a vehicle selected from the vehicle list from a group of repositories in a computer system. The method displays a three-dimensional massive model visualization of the vehicle using the three-dimensional massive model visualization data set downloaded to the client device.

Yet another embodiment of the present disclosure provides a three-dimensional massive model visualization data sets system according to claim 12.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of a three-dimensional massive model visualization environment in accordance with an illustrative embodiment;
**Figure 2** is an illustration of a distribution interface in accordance with an illustrative embodiment;
**Figure 3** is an illustration of a three-dimensional massive model visualization interface in accordance with an illustrative embodiment;
**Figure 4** is an illustration of a flowchart of a process for managing three-dimensional massive model visualization data sets in accordance with an illustrative embodiment;
**Figure 5** is an illustration of a flowchart of a process for automatic creation of three-dimensional massive model visualization data sets in accordance with an illustrative embodiment;
**Figure 6** is an illustration of a flowchart of a process for retrieving a three-dimensional massive model visualization data set in accordance with an illustrative embodiment;
**Figure 7** is an illustration of a block diagram of a data processing system in accordance with an illustrative embodiment;
**Figure 8** is an illustration of an aircraft manufacturing and service method in accordance with an illustrative embodiment;
**Figure 9** is an illustration of an aircraft in which an illustrative embodiment may be implemented; and
**Figure 10** is an illustration of a block diagram of a product management system in accordance with an illustrative embodiment.

### DETAILED DESCRIPTION

The illustrative embodiments recognize and take into account one or more different considerations. For example, the illustrative embodiments recognize and take into account that building a three-dimensional massive model visualization data set for complex object such as an aircraft places many requirements on a user. For example, the illustrative embodiments recognize and take account that the user will need to locate and obtain models for the different components of the aircraft, as well as other information, to build a three-dimensional massive model visualization data set. In locating models, the illustrative embodiments recognize and take into account that the user will need knowledge of query languages and which database selections to make in obtaining the correct models to build a three-dimensional massive model visualization data set.

Further, the illustrative embodiments also recognize and take into account the time needed to build a three-dimensional massive model visualization data set for use in visualizing an aircraft may be longer than desired. For example, building a three-dimensional massive model visualization data set may take one hour, two hours, or some other amount of time. This amount of time maybe problematic depending on when the visualization of the aircraft is needed. For example, the time is unpractical for users who often cannot devote their computing time to that purpose.

Also, the illustrative embodiments recognize and take account that the user will need to manage the three-dimensional massive model visualization data sets. The illustrative embodiments recognize and take into account that this management maybe problematic. For example, the illustrative embodiments recognize and take into account that the user will need to name and store the three-dimensional massive model visualization data sets in a location for use at another time. Misplaced data, poorly managed three-dimensional massive model visualization data sets, wasted hard drive space used to store old three-dimensional massive model visualization data sets, as well as other issues may result. The dataset downloaded onto shared devices and using up all the storage space with multiple users. The client software may be configured for multi-user operation to overcome this problem.

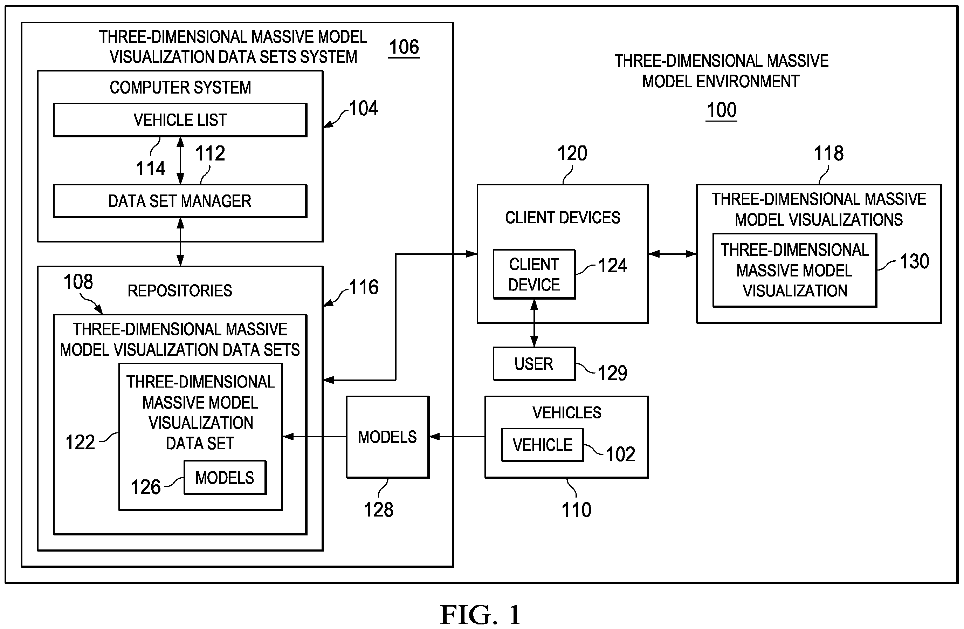

Thus, the illustrative embodiments recognize and take into account that an improved process for creating and managing three-dimensional massive model visualization data sets for users is needed. With reference now to the figures, and in particular with reference to **Figure 1**, an illustration of a block diagram of a three-dimensional massive model environment is depicted in accordance with an illustrative embodiment. As depicted, three-dimensional massive model environment **100** is an environment in which the displaying of vehicle **102** may be made using computer system **104** that generates three-dimensional massive model visualization data sets **108** that may be distributed to client devices **120** to display massive model visualizations on those client devices.

In this illustrative example, vehicle **102** may take various forms. For example, vehicle **102** may be selected from a group comprising a mobile platform, an aircraft, an airplane, a rotorcraft, a surface ship, a tank, a personnel carrier, a train, a spacecraft, a submarine, a bus, an automobile, and other suitable types of vehicles.

As depicted, computer system **104** is a physical hardware system and includes one or more data processing systems. When more than one data processing system is present, those data processing systems are in communication with each other using a communications medium. The communications medium may be a network. The data processing systems may be selected from at least one of a computer, a server computer, a tablet, or some other suitable type of data processing system.

As used herein, the phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, without limitation, two of item A, one of item B, and ten of item C; four of item B and seven of item C; or other suitable combinations.

In this illustrative example, three-dimensional massive model visualization data sets system **106** is present in computer system **104**. Three-dimensional massive model visualization data sets system **106** is configured to create and manage three-dimensional massive model visualization data sets **108** for a group of vehicles **110**. As used herein, a "group of" when used with reference to items means one or more items. For example, a group of vehicles **110** is one or more of vehicles **110**.

Three-dimensional massive model visualization data sets system **106** in computer system **104** includes data set manager **112**. As depicted, data set manager **112** in computer system **104** is configured to compile vehicle list **114** of vehicles **110** for which three-dimensional massive model visualization data sets **108** are to be built. Further, data set manager **112** is also configured to automatically build three-dimensional massive model visualization data sets **108** for vehicles **110** in vehicle list **114** using computer system **104** and store three-dimensional massive model visualization data sets **108** in a group of repositories **116**.

In this illustrative example, models **128** are models for vehicles **110**. In other words, these are models that may be used to create three-dimensional massive model visualization data sets **108** for vehicles **110** identified in vehicle list **114** of vehicles **110**. Further, data set manager **112** is configured to distribute three-dimensional massive model visualization data sets **108** to repositories **116**. The distribution is for client devices **120** to obtain three-dimensional massive model visualization data sets **108** from repositories **116** to display three-dimensional massive model visualizations **118** for vehicles **110** using three-dimensional massive model visualization data sets **108** on client devices **120**.

In the illustrative examples, client devices **120** are hardware devices that include processor units for processing information, such as three-dimensional massive model visualization data sets **108**. Client devices **120** may take a number of different forms. For example, client devices **120** maybe selected from at least one of a tablet computer, a workstation, a server computer, a laptop computer, or some other suitable type of data processing system.

As depicted, three-dimensional massive model visualization data set **122** in three-dimensional massive model visualization data sets **108** may represent a configuration for a vehicle in vehicles **110**. In another illustrative example, three-dimensional massive model visualization data set **122** may represent an instance of a vehicle. The representation of vehicles **110** may be for already produced vehicles, vehicles in production, vehicles that are being designed, or vehicles in some other state.

Data set manager **112** also is configured to selectively update three-dimensional massive model visualization data set **122** in three-dimensional massive model visualization data sets **108** in repositories **116** when three-dimensional massive model visualization data set **122** is out-of-date. For example, data set manager **112** may update three-dimensional massive model visualization data set **122** located on a group of repositories **116**.

In other illustrative examples, client devices **124** may update three-dimensional massive model visualization data set **122** located on client device **124**. Data set manager **112** sending at least one of a message, a command, program code, or other information to client device **124** that causes client device **124** indicate that an update is needed. The indication may be that when an updated three-dimensional massive model visualization data set is available for specific instances (e.g. a specific airplane line number). As a result, client device **124** may ask user **129** (through a dialog box of some type) if user **129** wants to update that specific instance. The update on client device **124** may be performed with a manual approval from user **129**. Client device **124** indicates if an update is available, but user **129** provides the input as to whether an update will occur.

When updating three-dimensional massive model visualization data set **122** on client device **124**, clients devices **124** may download all of a newest three-dimensional massive model visualization data set from a repository when user input is received to update three-dimensional massive model visualization data set **122**.

In another example, at least one of data set manager **112** or client device **124** may rebuild all of three-dimensional massive model visualization data set **122**. Data set manager **112** may rebuild three-dimensional massive model visualization data set **122** located in the repositories **116**.

Client device **124** may rebuild all of three-dimensional massive model visualization data set **122** on client device **124**. In another example, client device **124** may rebuild a first portion of the three-dimensional massive model visualization data set **122** on client device **124** that is out-of-date while a second portion of three-dimensional massive model visualization data set **122** is unchanged. These portions may be different in size and the portion may be discontinuous.

In the illustrative of example, the three-dimensional massive model visualization data set may be considered to be out-of-date when the current three-dimensional massive model visualization data set on client device **124** has a different timestamp from the version in repositories **116**. The three-dimensional massive model visualization data set may also be considered to be out-of-date when a model shape has changed, a location of a model has changed, a configuration of vehicles has changed, or some other change that makes three-dimensional massive model visualization data set **122** no longer current.

In still another illustrative example, client device **124** may update three-dimensional massive model visualization data set **122** located on client device **124** by at least one of masking a first group of models **126** or adding a second group of models **128** for three-dimensional massive model visualization data set **122**. In masking the first group of models, the item identifier may be removed from the display list.

In the illustrative example, data set manager **112** in three-dimensional massive model visualization data sets system **106** may provide the data set creation dates with three-dimensional massive model visualization data sets **108** stored in repositories **116**. Client devices **120** may access these creation dates in repositories **116**. This data allows client devices 120 to determine what has changed.

With three-dimensional massive model visualization data sets **108** being automatically built and updated, user **129** may more easily visualize vehicles **110** using three-dimensional massive model visualization data sets **108** corresponding to vehicles **110.** For example, three-dimensional massive model visualizations **118** of vehicle **110** may be displayed on client device **124** using three-dimensional massive model visualization data sets **108** obtained from repositories **116.** In one illustrative example, client device **124** may display three-dimensional massive model visualization **130** for a given vehicle from vehicle list **114** of vehicles **110** that are displayable using three-dimensional massive model visualization data sets **108** stored in the group of repositories **116** in computer system **104,** to thereby display a given configuration of vehicle **102** from vehicle list **114** of vehicles **110.**

Data set manager **112** may be implemented in software, hardware, firmware or a combination thereof. When software is used, the operations performed by data set manager **112** may be implemented in program code configured to run on hardware, such as a processor unit. When firmware is used, the operations performed by data set manager **112** may be implemented in program code and data and stored in persistent memory to run on a processor unit. When hardware is employed, the hardware may include circuits that operate to perform the operations in data set manager **112** in computer system **104** within three-dimensional massive model visualization data sets system **106.** Client device **120** includes client-side software that may be used to visualize three-dimensional massive model visualization data sets **108** stored in repositories **116** as three-dimensional massive model visualizations **118.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Programmable logic devices include, for example, a programmable logic array, a programmable array logic, a field programmable logic array, a field programmable gate array, and other suitable hardware devices. Additionally, the processes may be implemented in organic components integrated with inorganic components and may be comprised entirely of organic components, excluding a human being. For example, the processes may be implemented as circuits in organic semiconductors.

Computer system **104** is a physical hardware system and includes one or more data processing systems. When more than one data processing system is present, those data processing systems are in communication with each other using a communications medium. The communications medium may be a network. The data processing systems may be selected from at least one of a computer, a server computer, a tablet, or some other suitable data processing system.

In one illustrative example, one or more technical solutions are present that overcome a technical problem with a technical problem with finding, building, and managing three-dimensional objects using three-dimensional massive model visualization data sets. As a result, one or more technical solutions may provide a technical effect to automating and increasing the ease at which three-dimensional massive model visualization data sets are used in client devices.

As a result, computer system **104,** when running program code for processes in data set manager **112,** operates as a special purpose computer system in which data set manager **112** in computer system **104** enables creating and performing other operations in managing three-dimensional massive model visualization data sets **108**. As used herein, the terms "computer system," "comparator," "manager," "component," or "module" may include a hardware and/or software system that operates to perform one or more functions. For example, the comparator, manager, module, component, or system may include a computer processor, controller, or other logic-based device that performs operations based on instructions stored on a tangible and non-transitory computer readable storage medium, such as a computer memory. Alternatively, the comparator, manager, module, component, or system may include a hard-wired device that performs operations based on hard-wired logic of the device.

The flowcharts, modules, or components shown in the attached figures may represent the hardware that operates based on software instructions and hardware logic, the software that directs hardware to perform the operations, or a combination thereof. In particular, data set manager **112** running one or more processes on computer system **104** transforms computer system **104** into a special purpose computer system as compared to currently available general computer systems that do not have data set manager **112**.

The illustration of three-dimensional massive model environment **100** in **Figure 1** is not meant to imply physical or architectural limitations to the manner in which an illustrative embodiment may be implemented. Other components, in addition to or in place of the ones illustrated, may be used. Some components may be unnecessary. Also, the blocks are presented to illustrate some functional components. One or more of these blocks may be combined, divided, or combined and divided into different blocks when implemented in an illustrative embodiment.

For example, different users on client device **124** share one or more common three-dimensional massive model visualization data sets that may be stored on client device **124**. In another illustrative example, the same three-dimensional massive model visualization data set may be obtained from the group of repositories **116**, such as a cloud storage system, such that a user may access the same three-dimensional massive model visualization data set at different ones of client devices **120**.

Another illustrative example may be applied to objects in addition to or in place of vehicles **110**. For example, objects may be selected from at least one of a mobile platform, a stationary platform, a land-based structure, an aquatic-based structure, a space-based structure, an aircraft, a surface ship, a tank, a personnel carrier, a train, a spacecraft, a space station, a satellite, a submarine, an automobile, a power plant, a bridge, a dam, a house, a manufacturing facility, a building, or some other suitable type of object for which a three-dimensional massive model visualization is desired.

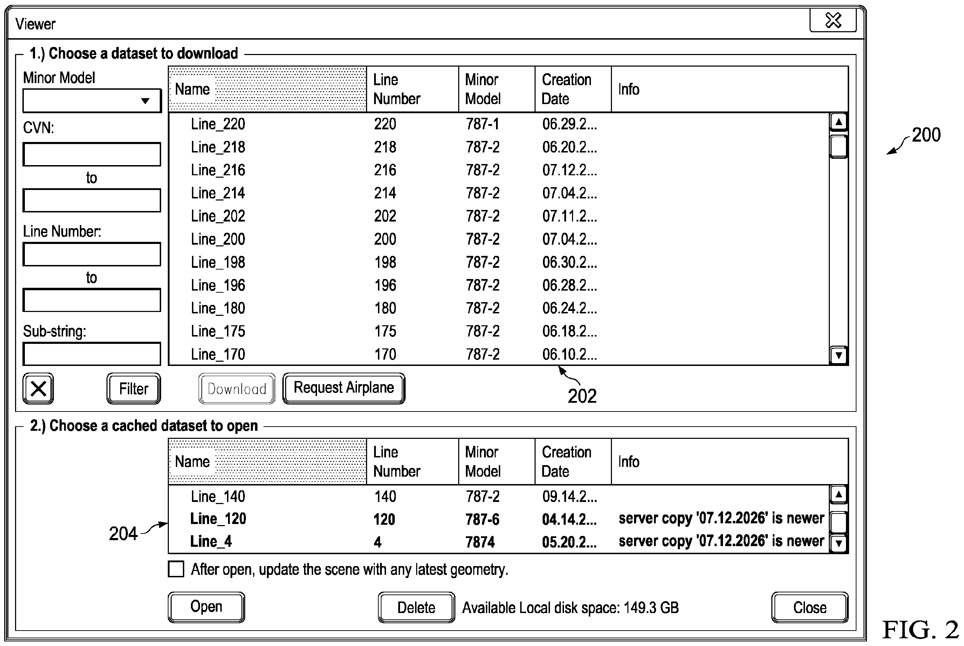

With reference next to **Figure 2****,** an illustration of a distribution interface is depicted in accordance with an illustrative embodiment. In this illustrative example, distribution interface **200** is an example of a graphical user interface that may be displayed on client devices **120** of **Figure 1**.

As depicted, distribution interface **200** displays a list of three-dimensional massive model visualization data sets that may be accessed by a user. In this example, section **202** shows a list of massive model visualization data sets that may be downloaded to a client device. A selection of a three-dimensional massive model visualization data set from section **202** results in the selected three-dimensional massive model visualization data set being downloaded to the client device.

In this illustrative example, section **204** illustrates three-dimensional massive model visualization data sets that have been cached or stored locally on the client device.

A user may select a three-dimensional massive model visualization data set from section **204** for display. The selection of a three-dimensional massive model visualization data set from section **204** results in a three-dimensional massive data set being displayed by a visualization application.

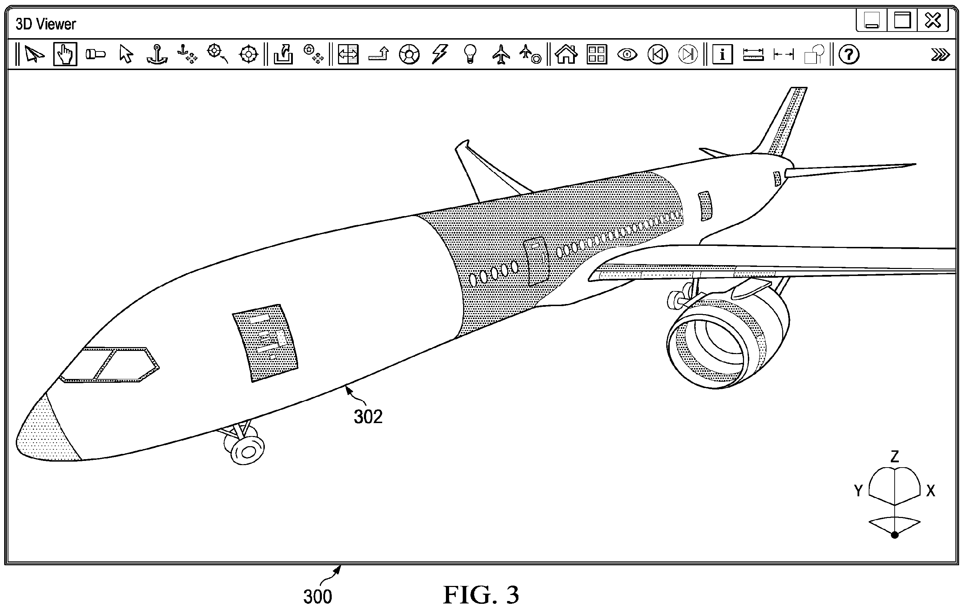

With reference now to **Figure 3****,** an illustration of a three-dimensional massive model visualization interface is depicted in accordance with an illustrative embodiment. In this illustrative example, three-dimensional massive model visualization interface **300** is an example of a graphical user interface that may be displayed on client device **124** of **Figure 1**.

In this illustrative example, airplane **302** is displayed in three-dimensional massive model visualization interface **300.** The display of airplane **302** is made in response to a selection of a three-dimensional massive model visualization data set from section **204** of distribution interface **200** in **Figure 2****.**

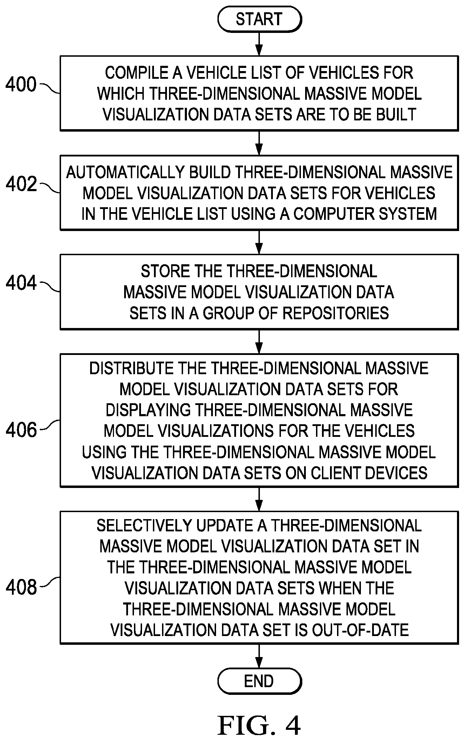

Turning next to **Figure 4****,** a flowchart of a process for managing three-dimensional massive model visualization data sets is depicted in accordance with an illustrative embodiment. The process illustrated in **Figure 4** may be implemented in three-dimensional massive model environment **100** in **Figure 1****.** The different operations may be implemented as program code that is run by one or more processor units in computer system **104** in **Figure 1****.** The processor units may be in the same data processing system or a different data processing systems, depending on the implementation. For example, the operations in **Figure 4** may be implemented in data set manager **112** in **Figure 1****.**

The process begins by compiling a vehicle list of vehicles for which three-dimensional massive model visualization data sets are to be built (operation **400**). In operation **400,** the vehicle list is a build list that may identify vehicles, such as aircraft by model, line number, part numbers, location of visualization data, distribution information, rebuild frequency, and other information that may be used to create three-dimensional massive model visualization data sets for the vehicles.

The process automatically builds three-dimensional massive model visualization data sets for vehicles in the vehicle list using a computer system (operation **402).** In operation **402,** the automatic building may be performed by a data set manager directly, or by the data set manager initiating other processes that build the three-dimensional massive model visualization data sets. Further, the building of the three-dimensional massive model visualization data sets may be initiated by trigger events. The trigger events may be, for example, a date of delivery for an aircraft, a date when manufacturing of aircraft, or other dates or events that may be used to trigger the automatic building of the three-dimensional massive model visualization data sets.

The process stores the three-dimensional massive model visualization data sets in a group of repositories (operation **404**). The three-dimensional massive model visualization data sets may be stored in repositories in various locations. The locations of repositories may depend on various factors, such as geographic location of client devices that will access the three-dimensional massive model visualization data sets, network configurations, bandwidth availability, and other suitable factors.

The process distributes the three-dimensional massive model visualization data sets for displaying three-dimensional massive model visualizations for the vehicles using the three-dimensional massive model visualization data sets on client devices (operation **406**). The distribution may include retrieval of the massive model visualization data sets by client devices. In other illustrative examples, the distribution includes sending location information to users. The location information may include, for example, lists or links to the three-dimensional massive model visualization data sets.

The process selectively updates a three-dimensional massive model visualization data set in the three-dimensional massive model visualization data sets when the three-dimensional massive model visualization data set is out-of-date (operation **408**). The process terminates thereafter. In other illustrative examples, this process may be repeated any number of times.

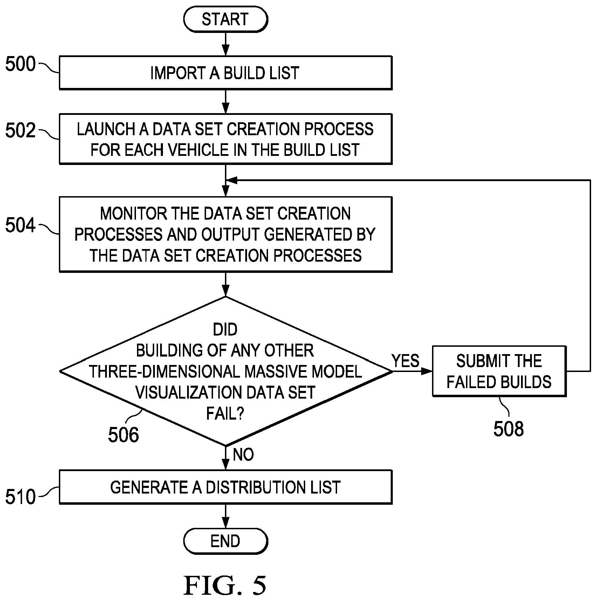

With reference next to **Figure 5****,** a flowchart of a process for automatic creation of three-dimensional massive model visualization data sets is depicted in accordance with an illustrative embodiment. The process illustrated in **Figure 5** is an example of one implementation for operation **402** in **Figure 4****.**

The process illustrated in **Figure 5** may be implemented in three-dimensional massive model environment **100** in **Figure 1****.** The different operations may be implemented as program code that is run by one or more processor units in computer system **104** in **Figure 1****.** The processor units may be in the same data processing system or different data processing systems, depending on the implementation.

The process begins by importing a build list (operation **500**). The process launches a data set creation process for each vehicle in the build list (operation **502**).

The process monitors the data set creation processes and output generated by the data set creation processes (operation **504**). The process determines whether building of any of the three-dimensional massive model visualization data sets failed (operation **506**). If the building of any of the three-dimensional massive model visualization data sets failed, the process submits those failed builds (operation **508**). The process then returns to operation **504.** Otherwise, the process generates a distribution list (operation **510**). The process terminates thereafter.

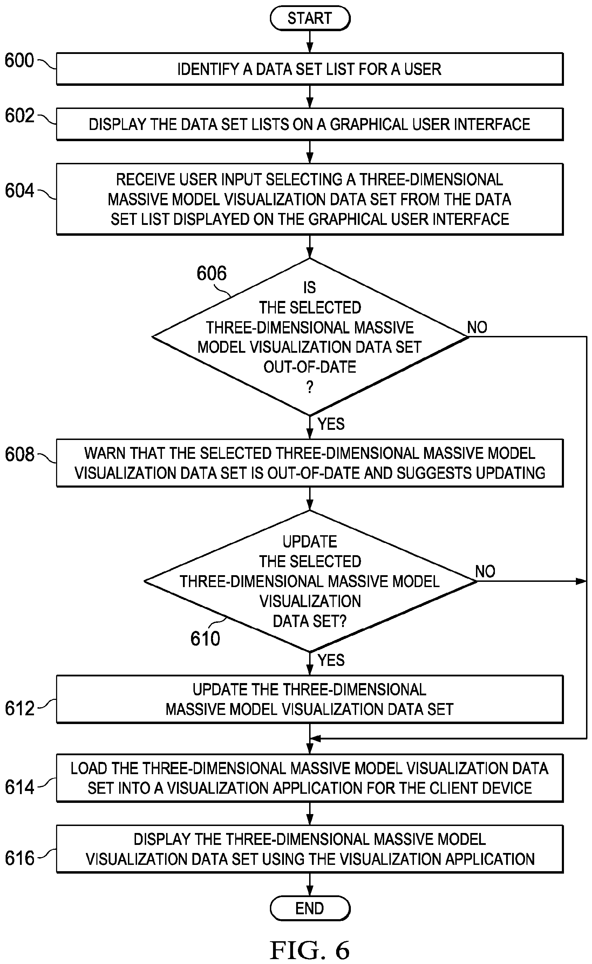

With reference now to **Figure 6****,** a flowchart of a process for retrieving a three-dimensional massive model visualization data set is depicted in accordance with an illustrative embodiment. The process illustrated in **Figure 6** may be implemented in three-dimensional massive model environment **100** in **Figure 1****.** The different operations may be implemented as program code that is run by one or more processor units in computer system **104** in **Figure 1****.** The processor units may be in the same data processing system or different data processing systems, depending on the implementation. For example, these operations may be implemented in client devices **120** to generate three-dimensional massive model visualization **130** of **Figure 1****.**

The process begins by identifying a data set list for a user (operation **600**). The data set list is a list of three-dimensional massive model visualization data sets that have been assigned or distributed to the user for visualization for other uses. The process displays the data set list on a graphical user interface (operation **602**).

The process receives user input selecting a three-dimensional massive model visualization data set from the data set list displayed on the graphical user interface (operation **604**). The process determines whether the selected three-dimensional massive model visualization data set is out-of-date (operation **606**). In operation **606**, the determination as to whether the three-dimensional massive model visualization data set is out-of-date may be made in a number different ways. For example, the determination may be made by comparing timestamps, date modified information, or other suitable forms of information that may be used to indicate whether a three-dimensional massive model visualization data set is out-of-date.

If the three-dimensional massive model visualization data set is out-of-date, the process warns that the selected three-dimensional massive model visualization data set is out-of-date and suggests updating (operation **608**). In operation **608**, the user may choose to update the three-dimensional massive model visualization data set or use the current one that is out-of-date. A determination is made as to whether to update the selected three-dimensional massive model visualization data set (operation **610).** This determination may be made from user input indicating whether an update should occur.

If the three-dimensional massive model visualization data set is to be updated, the process updates the three-dimensional massive model visualization data set (operation **612**). The update in operation **612** may be performed in a number different ways. For example, the update may be made by patching the existing three-dimensional massive model visualization dataset with new information or by downloading a newer version of the three-dimensional massive model visualization data set from the server.

For example, an updated version of the three-dimensional massive model visualization data set may be downloaded from a repository. In another example, the client device may perform the update locally without downloading another three-dimensional massive model visualization data set. In other illustrative examples, the client device may mask models that are no longer used and download models that may have been added to the three-dimensional massive model visualization data set to obtain updated information for displaying a three-dimensional massive model visualization.

The process then loads the three-dimensional massive model visualization data set into a visualization application for the client device (operation **614**). The process displays the three-dimensional massive model visualization using the visualization application (operation **616**). The process terminates thereafter.

With reference again to operation **610**, if the three-dimensional massive model visualization data set is not to be updated, the process proceeds to operation **614** as described above. With reference back to operation **606**, if the selected three-dimensional massive model visualization data set is not out-of-date, the process proceeds to operation **614**.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added, in addition to the illustrated blocks, in a flowchart or block diagram.

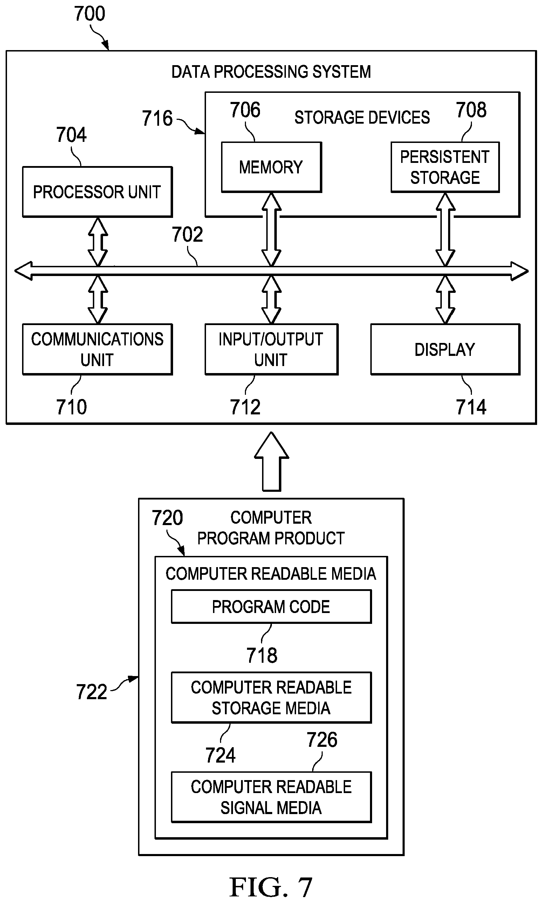

Turning now to **Figure 7****,** an illustration of a block diagram of a data processing system is depicted in accordance with an illustrative embodiment. Data processing system **700** may be used to implement one or more data processing systems in computer system **104** of **Figure 1****.** Data processing system **700** also may be used to implement client devices **120** in **Figure 1****.** In this illustrative example, data processing system **700** includes communications framework **702**, which provides communications between processor unit **704**, memory **706**, persistent storage **708**, communications unit **710**, input/output unit **712**, and display **714**. In this example, communication frameworks **702** may take the form of a bus system.

Processor unit **704** serves to execute instructions for software that may be loaded into memory **706**. Processor unit **704** may be a number of processors, a multi-processor core, or some other type of processor, depending on the particular implementation.

Memory **706** and persistent storage **708** are examples of storage devices **716**. A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **716** may also be referred to as computer-readable storage devices in these illustrative examples. Memory **706**, in these examples, may be, for example, a random-access memory or any other suitable volatile or nonvolatile storage device. Persistent storage **708** may take various forms, depending on the particular implementation.

For example, persistent storage **708** may contain one or more components or devices. For example, persistent storage **708** may be a hard drive, a solid state hard drive, a flash memory, a rewritable optical disk, a rewritable magnetic tape, or some combination of the above. The media used by persistent storage **708** also may be removable. For example, a removable hard drive may be used for persistent storage **708**.

Communications unit **710**, in these illustrative examples, provides for communications with other data processing systems or devices. In these illustrative examples, communications unit **710** is a network interface card.

Input/output unit **712** allows for input and output of data with other devices that may be connected to data processing system **700**. For example, input/output unit **712** may provide a connection for user input through at least one of a keyboard, a mouse, or some other suitable type of input device. Further, input/output unit **712** may send output to a printer. Display **714** provides a mechanism to display information to a user.

Instructions for at least one of the operating system, applications, or programs may be located in storage devices **716**, which are in communication with processor unit **704** through communications framework **702**. The processes of the different embodiments may be performed by processor unit **704** using computer-implemented instructions, which may be located in a memory, such as memory **706**.

These instructions are referred to as program code, computer-usable program code, or computer-readable program code that may be read and executed by a processor in processor unit **704**. The program code in the different embodiments may be embodied on different physical or computer-readable storage media, such as memory **706** or persistent storage **708**.

Program code **718** is located in a functional form on computer-readable media **720** that is selectively removable and may be loaded onto or transferred to data processing system **700** for execution by processor unit **704**. Program code **718** and computer-readable media **720** form computer program product **722** in these illustrative examples. In one example, computer-readable media **720** may be computer-readable storage media **724** or computer-readable signal media **726**.

In these illustrative examples, computer-readable storage media **724** is a physical or tangible storage device used to store program code **718** rather than a medium that propagates or transmits program code **718**. Alternatively, program code **718** may be transferred to data processing system **700** using computer-readable signal media **726**. Computer-readable signal media **726** may be, for example, a propagated data signal containing program code **718**. For example, computer-readable signal media **726** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **700** are not meant to provide architectural limitations to the manner in which different embodiments may be implemented. The different illustrative embodiments may be implemented in a data processing system including components, in addition to or in place of those illustrated, for data processing system **700**. Other components shown in **Figure 7** can be varied from the illustrative examples shown. The different embodiments may be implemented using any hardware device or system capable of running program code **718**.

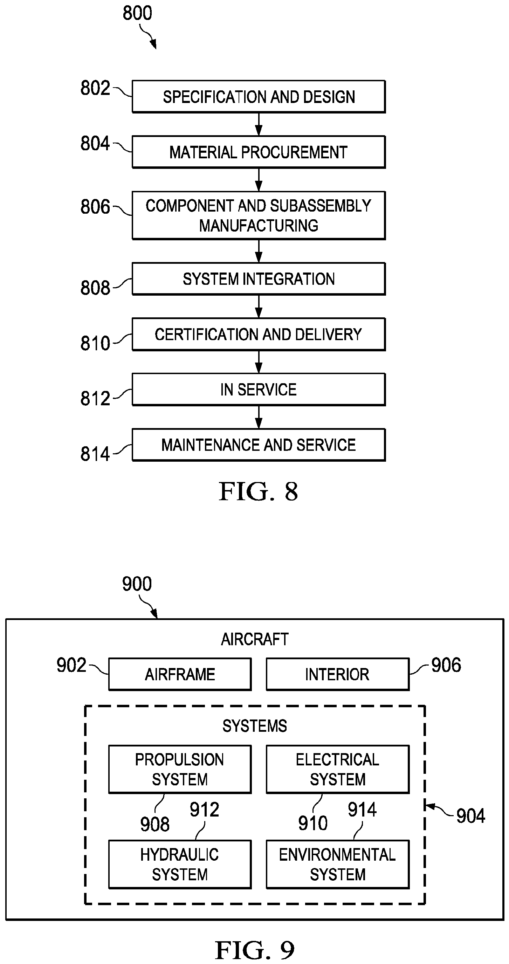

Illustrative embodiments of the disclosure may be described in the context of aircraft manufacturing and service method **800** as shown in **Figure 8** and aircraft **900** as shown in **Figure 9**. Turning first to **Figure 8**, an illustration of an aircraft manufacturing and service method is depicted in accordance with an illustrative embodiment. During pre-production, aircraft manufacturing and service method **800** may include specification and design **802** of aircraft **900** in **Figure 9** and material procurement **804**.

During production, component and subassembly manufacturing **806** and system integration **808** of aircraft **900** in **Figure 9** takes place. Thereafter, aircraft **900** in **Figure 9** may go through certification and delivery **810** in order to be placed in service **812**. While in service **812** by a customer, aircraft **900** in **Figure 9** is scheduled for routine maintenance and service **814**, which may include modification, reconfiguration, refurbishment, or other maintenance and service.

Each of the processes of aircraft manufacturing and service method **800** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 9****,** an illustration of an aircraft is depicted in which an illustrative embodiment may be implemented. In this example, aircraft **900** is produced by aircraft manufacturing and service method **800** in **Figure 8** and may include airframe **902** with plurality of systems **904** and interior **906.** Examples of systems **904** include one or more of propulsion system **908**, electrical system **910,** hydraulic system **912,** and environmental system **914.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **800** in **Figure 8****.** For example, three-dimensional massive model visualization data sets system **106** in **Figure 1** may be used to display different configurations for aircraft **900** during specification and design **802** of aircraft **900,** component and subassembly manufacturing **806,** and system integration **808.** As another example, three-dimensional massive model visualization data sets system **106** also may be used to create and display aircraft **900** during routine maintenance and service **814.** For example, the display of the configurations may be used to plan or implement work orders for modification, reconfiguration, refurbishment, or other maintenance and service for aircraft **900.**

In one illustrative example, components or subassemblies produced in component and subassembly manufacturing **806** in **Figure 8** may be fabricated or manufactured in a manner similar to components or subassemblies produced while aircraft **900** is in service **812** in **Figure 8****.** As yet another example, one or more apparatus embodiments, method embodiments, or a combination thereof may be utilized during production stages, such as component and subassembly manufacturing **806** and system integration **808** in **Figure 8****.** One or more apparatus embodiments, method embodiments, or a combination thereof may be utilized while aircraft **900** is in service **812**, during maintenance and service **814** in **Figure 8****,** or both. The use of a number of the different illustrative embodiments may substantially expedite the assembly of aircraft **900**, reduce the cost of aircraft **900**, or both expedite the assembly of aircraft **900** and reduce the cost of aircraft **900**.

For example, with automated creation of three-dimensional massive model visualization data sets **108**, the amount of time and effort needed to create these data sets for viewing on client devices may be reduced. Further, data set manager **112** also provides an ability to update three-dimensional massive model visualization data sets **108** used by client devices **120**. As result, less effort and knowledge is needed by users of client devices **120** to view three-dimensional massive model visualizations **118** for vehicles **110**.

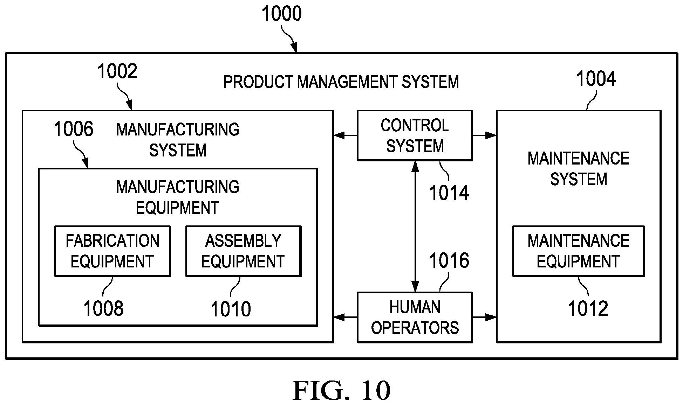

Turning now to **Figure 10****,** an illustration of a block diagram of a product management system is depicted in accordance with an illustrative embodiment. Product management system **1000** is a physical hardware system. In this illustrative example, product management system **1000** may include at least one of manufacturing system **1002** or maintenance system **1004.**

Manufacturing system **1002** is configured to manufacture products, such as aircraft **900** in **Figure 9****.** As depicted, manufacturing system **1002** includes manufacturing equipment **1006.** Manufacturing equipment **1006** includes at least one of fabrication equipment **1008** or assembly equipment **1010.**

Fabrication equipment **1008** is equipment that may be used to fabricate components for parts used to form aircraft **900.** For example, fabrication equipment **1008** may include machines and tools. These machines and tools may be at least one of a drill, a hydraulic press, a furnace, a mold, a composite tape laying machine, a vacuum system, a lathe, or other suitable types of equipment. Fabrication equipment **1008** may be used to fabricate at least one of metal parts, composite parts, semiconductors, circuits, fasteners, ribs, skin panels, spars, antennas, or other suitable types of parts.

Assembly equipment **1010** is equipment used to assemble parts to form aircraft **900.** In particular, assembly equipment **1010** may be used to assemble components and parts to form aircraft **900.** Assembly equipment **1010** also may include machines and tools. These machines and tools may be at least one of a robotic arm, a crawler, a faster installation system, a rail-based drilling system, or a robot. Assembly equipment **1010** may be used to assemble parts such as seats, horizontal stabilizers, wings, engines, engine housings, landing gear systems, and other parts for aircraft **900.**

In this illustrative example, maintenance system **1004** includes maintenance equipment **1012.** Maintenance equipment **1012** may include any equipment needed to perform maintenance on aircraft **900.** Maintenance equipment **1012** may include tools for performing different operations on parts on aircraft **900.** These operations may include at least one of disassembling parts, refurbishing parts, inspecting parts, reworking parts, manufacturing replacement parts, or other operations for performing maintenance on aircraft **900.** These operations may be for routine maintenance, inspections, upgrades, refurbishment, or other types of maintenance operations.

In the illustrative example, maintenance equipment **1012** may include ultrasonic inspection devices, x-ray imaging systems, vision systems, drills, crawlers, and other suitable devices. In some cases, maintenance equipment **1012** may include fabrication equipment **1008,** assembly equipment **1010,** or both to produce and assemble parts that may be needed for maintenance.

Product management system **1000** also includes control system **1014.** Control system **1014** is a hardware system and may also include software or other types of components. Control system **1014** is configured to control the operation of at least one of manufacturing system **1002** or maintenance system **1004.** In particular, control system **1014** may control the operation of at least one of fabrication equipment **1008,** assembly equipment **1010,** or maintenance equipment **1012.**

The hardware in control system **1014** may be using hardware that may include computers, circuits, networks, and other types of equipment. The control may take the form of direct control of manufacturing equipment **1006.** For example, robots, computer-controlled machines, and other equipment may be controlled by control system **1014.** In other illustrative examples, control system **1014** may manage operations performed by human operators **1016** in manufacturing or performing maintenance on aircraft **900**. For example, control system **1014** may assign tasks, provide instructions, display models, or perform other operations to manage operations performed by human operators **1016.**

In these illustrative examples, three-dimensional massive model visualization data sets system **10**6 and data set manager **112** may be implemented in control system **1014** to manage at least one of the manufacturing or maintenance of aircraft **900** in **Figure 9****.** With data set manager **112**, three-dimensional massive model visualization data sets **108** may be created and managed for use by client devices **120** in viewing three-dimensional massive model visualizations **118** of products, such as vehicles **110** of **Figure 1****.** These visualizations may be made for at least one of manufacturing or maintenance of aircraft **900** in **Figure 9**.

In the different illustrative examples, human operators **1016** may operate or interact with at least one of manufacturing equipment **1006,** maintenance equipment **1012,** or control system **1014.** This interaction may be performed to manufacture aircraft **900**.

Of course, product management system **1000** may be configured to manage other products other than aircraft **900**. Although product management system **1000** has been described with respect to manufacturing in the aerospace industry, product management system **1000** may be configured to manage products for other industries. For example, product management system **1000** may be configured to manufacture products for the automotive industry, as well as any other suitable industries.

Thus, the different illustrative examples provide a method and apparatus for managing three-dimensional massive model visualization data sets. In one illustrative example, three-dimensional massive model visualization data sets may be automatically created and distributed for use by client devices. The automatic creation may allow for three-dimensional massive model visualization data sets to be created prior to those three-dimensional massive model visualization data sets being needed for use. Additionally, with the automated creation, times may be selected when lower use of processor resources occur to increase processor resources available for creating the three-dimensional massive model visualization data sets.

Additionally, the data set manager provides an ability to keep the three-dimensional massive model visualization data sets fresh. In other words, an identification of out-of-date three-dimensional massive model visualization data sets occurs and updated three-dimensional massive model visualization data sets may be created. Further, a client device also may update a three-dimensional massive model visualization data set fresh through different updating mechanisms when the client device determines that the three-dimensional massive model visualization data set is no longer up-to-date. One or more illustrative examples provide a method and apparatus that increases the ease at which users may access and use three-dimensional massive model visualization data sets and client devices.

As depicted, three-dimensional massive model visualization data sets are pre-built in the computer system for use by users on client devices. The users at the client devices may download the three-dimensional massive model visualization data sets without needing to process data to create those data sets.

The description of the different illustrative embodiments has been presented for purposes of illustration and description and is not intended to be exhaustive or limited to the embodiments in the form disclosed. The different illustrative examples describe components that perform actions or operations.

In an illustrative embodiment, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for managing three-dimensional massive model visualization data sets (108) comprising three-dimensional models of parts of vehicles, the method comprising:
compiling (400), using a data set manager (112) in a computer system (104), a list of vehicles for which the three-dimensional massive model visualization data sets (108) are to be built, wherein the list of vehicles is a build list that identifies the vehicles by model, line number, part numbers, location of visualization data, distribution information or rebuild frequency;
automatically building (402) the three-dimensional massive model visualization data sets (108) for the vehicles in the list using the computer system (104) by importing the build list and creating a data set for each vehicle in the build list;
storing (404) the three-dimensional massive model visualization data sets (108) in a group of repositories (116) ;
distributing (406) the three-dimensional massive model visualization data sets (108) for displaying massive model visualizations for the vehicles using the three-dimensional massive model visualization data sets (108) on client devices (120) ;
receiving user input of a request for selectively updating a three-dimensional massive model visualization data set in the three-dimensional massive model visualization data sets (108) when the three-dimensional massive model visualization data set is out-of-date; and
selectively updating the three-dimensional massive model visualization data set located on the group of repositories, wherein
the determination of the three-dimensional massive model visualization data set being out-of-date comprises determining whether a location of a model has changed or a configuration of vehicles has changed, and wherein
the automatic building is carried out at a time selected when low use of processor resources occurs.

2. The method of claim 1 further comprising:
selectively updating (408) the three-dimensional massive model visualization data set in the three-dimensional massive model visualization data sets (108) when the three-dimensional massive model visualization data set is out-of-date when the user input is received through updating the three-dimensional massive model visualization data set located on a client device (120) by downloading information to rebuild the three-dimensional massive model visualization data set.

3. The method of claim 2 further comprising:
updating the three-dimensional massive model visualization data set located on the client device (120) when the user input is received by downloading all of a newest three-dimensional massive model data set from a repository (116) .

4. The method of claim 2 further comprising:
updating the three-dimensional massive model visualization data set located on the client device (120) when the user input is received by rebuilding a first portion of the three-dimensional massive model visualization data set on the client device that is out-of-date while a second portion of the three-dimensional massive model visualization data set is unchanged.

5. The method of any of claims 1 to 4 further comprising:
selectively updating (408) the three-dimensional massive model visualization data set in the three-dimensional massive model visualization data sets (108) when the three-dimensional massive model visualization data set is out-of-date when the user input is received by updating the three-dimensional massive model visualization data set on a client device (120) by at least one of masking a first group of models or adding a second group of models.

6. The method of claim 2 further comprising:
updating the three-dimensional massive model visualization data set located on the client device (120) when the user input is received by rebuilding of all of the three-dimensional massive model visualization data set on the client device (120) that is out-of-date.

7. The method of any of claims 1 to 6 further comprising:
displaying the massive model visualizations for the vehicles on the client devices (120) using the three-dimensional massive model visualization data sets (108).

8. The method of any of claims 1 to 7 further comprising:
displaying a massive model visualization for a given vehicle from the list of vehicles that are displayable using the three-dimensional massive model visualization data sets (108) stored in the group of repositories (116) in the computer system (104), to thereby display a given configuration of an object from the list of vehicles.

9. The method of any of claims 1 to 8, wherein the three-dimensional massive model visualization data set in the three-dimensional massive model visualization data sets represents an instance of a vehicle.

10. The method of any of claims 7 to 9, wherein the step of displaying three-dimensional massive model visualization data sets on a client device (120) comprises:
displaying the vehicle list of vehicles displayable that are on the client device (120);
downloading a three-dimensional massive model visualization data set in the three-dimensional massive model visualization data sets corresponding to a vehicle selected from the vehicle list from the group of repositories (116) in the computer system (104); and
displaying a massive model visualization of the vehicle using the three-dimensional massive model visualization data set downloaded to the client device (120).

11. The method of claim 10 further comprising:
selectively updating the three-dimensional massive model visualization data set prior to displaying the massive model visualization of the vehicle using the three-dimensional massive model visualization data set downloaded to the client device when the three-dimensional massive model visualization data set is out-of-date and when a user input is received to update the three-dimensional massive model visualization data set.

12. A system (100) for managing three-dimensional massive model visualization data sets comprising three-dimensional models of parts of vehicles, the system (100) comprising:
a computer system (104); and
a data set manager (112) in the computer system (104), wherein the data set manager (112) is configured to:
compile (400) a vehicle list of vehicles for which three-dimensional massive model visualization data sets (108) are to be built, wherein the list of vehicles is a build list that identifies the vehicles by model, line number, part numbers, location of visualization data, distribution information or rebuild frequency;
automatically build (402) the three-dimensional massive model visualization data sets (108) for vehicles in the vehicle list using the computer system (104) by importing the build list and creating a data set for each vehicle in the build list;
store (404) the three-dimensional massive model visualization data sets (108) in a group of repositories (116) ;
distribute (406) the three-dimensional massive model visualization data sets (108) for displaying massive model visualizations for the vehicles using the three-dimensional massive model visualization data sets on client devices (120);
receive user input of a request for selectively updating a three-dimensional massive model visualization data set in the three-dimensional massive model visualization data sets (108) when the three-dimensional massive model visualization data set is out-of-date, and
update the three-dimensional massive model visualization data set located on the group of repositories, wherein
the determination of the three-dimensional massive model visualization data set being out-of-date comprises determining whether a location of a model has changed or a configuration of vehicles has changed, and wherein
the automatic building is carried out at a time selected when low use of processor resources occurs.

13. The three-dimensional massive model visualization data sets system (100) of claim 12 further comprising:
a client device (120) local to a user that requests a three-dimensional massive model visualization data set in the three-dimensional massive model visualization data sets (108) from the group of repositories (116) for displaying a three-dimensional massive model visualization for the vehicles.

14. The three-dimensional massive model visualization data sets system (100) of claim 13, wherein the three-dimensional massive model visualization data set in the three-dimensional massive model visualization data sets (108) represents an instance of a vehicle.

## Patentansprüche

1. Verfahren zum Verwalten von dreidimensionalen massiven Modellvisualisierung-Datensätzen (108), die dreidimensionale Modelle von Komponenten von Fahrzeug aufweisen, wobei das Verfahren aufweist:
Zusammenstellen (400) einer Liste von Fahrzeugen, für die die dreidimensionalen massiven Modellvisualisierung-Datensätze (108) zu bauen sind, unter Verwendung eines Datensatz-Managers (112) in einem Computersystem (104), wobei die Liste von Fahrzeugen eine Bauliste ist, die die Fahrzeuge mittels Modell, Liniennummer, Komponentennummern, Ort von Visualisierungsdaten, Verteilungsinformationen oder Umbauhäufigkeit identifiziert;
automatisches Bauen (402) der dreidimensionalen massiven Modellvisualisierung-Datensätze (108) für die Fahrzeuge in der Liste unter Verwendung des Computersystems (104) durch Importieren der Bauliste und Erzeugen eines Datensatzes für jedes Fahrzeug in der Bauliste;
Speichern (404) der dreidimensionalen massiven Modellvisualisierung-Datensätze (108) in einer Gruppe von Repositorien (116);
Verteilen (406) der dreidimensionalen massiven Modellvisualisierung-Datensätze (108) zum Anzeigen von massiven Modellvisualisierungen für die Fahrzeuge unter Verwendung der dreidimensionalen massiven Modellvisualisierung-Datensätze (108) auf Kundengeräten (120);
Empfangen einer Benutzereingabe einer Anfrage zum selektiven Aktualisieren eines dreidimensionalen massiven Modellvisualisierung-Datensatzes in den dreidimensionalen massiven Modellvisualisierung-Datensätzen (108), wenn der dreidimensionale massive Modellvisualisierung-Datensatz veraltet ist; und
selektives Aktualisieren des an der Gruppe von Repositorien vorhandenen dreidimensionalen massiven Modellvisualisierung-Datensatzes, wobei
die Bestimmung, dass der dreidimensionale massive Modellvisualisierung-Datensatz veraltet ist, aufweist: Bestimmen, ob sich ein Ort eines Modells geändert hat oder ob sich eine Konfiguration von Fahrzeugen geändert hat, und wobei
das automatische Bauen zu einer ausgewählten Zeit durchgeführt wird, wenn eine geringe Nutzung von Prozessorressourcen auftritt.

2. Verfahren nach Anspruch 1, weiterhin aufweisend:
selektives Aktualisieren (408) des dreidimensionalen massiven Modellvisualisierung-Datensatzes in den dreidimensionalen massiven Modellvisualisierung-Datensätzen (108), wenn der dreidimensionale massive Modellvisualisierung-Datensatz veraltet ist, beim Empfang der Benutzereingabe durch Aktualisieren des auf einem Kundengerät (120) vorhandenen dreidimensionalen massiven Modellvisualisierung-Datensatzes durch Herunterladen von Informationen, um den dreidimensionalen massiven Modellvisualisierung-Datensatz umzubauen.

3. Verfahren nach Anspruch 2, weiterhin aufweisend:
Aktualisieren des auf dem Kundengerät (120) vorhandenen dreidimensionalen massiven Modellvisualisierung-Datensatzes beim Empfang der Benutzereingabe durch Herunterladen eines gesamten neuesten dreidimensionalen massiven Modell-Datensatzes aus einem Repositorium (116).

4. Verfahren nach Anspruch 2, weiterhin aufweisend:
Aktualisieren des auf dem Kundengerät (120) vorhandenen dreidimensionalen massiven Modellvisualisierung-Datensatzes beim Empfang der Benutzereingabe durch Umbauen eines ersten Teils des dreidimensionalen massiven Modellvisualisierung-Datensatzes auf dem Kundengerät, der veraltet ist, während ein zweiter Teil des dreidimensionalen massiven Modellvisualisierung-Datensatzes unverändert bleibt.

5. Verfahren nach einem der Ansprüche 1 bis 4, weiterhin aufweisend:
selektives Aktualisieren (408) des dreidimensionalen massiven Modellvisualisierung-Datensatzes in den dreidimensionalen massiven Modellvisualisierung-Datensätzen (108), wenn der dreidimensionale massive Modellvisualisierung-Datensatz veraltet ist, beim Empfang der Benutzereingabe durch Aktualisieren des dreidimensionalen massiven Modellvisualisierung-Datensatzes auf einem Kundengerät (120) durch Maskieren einer ersten Gruppe von Modellen und/oder Hinzufügen einer zweiten Gruppe von Modellen.

6. Verfahren nach Anspruch 2, weiterhin aufweisend:
Aktualisieren des auf dem Kundengerät (120) vorhandenen dreidimensionalen massiven Modellvisualisierung-Datensatzes beim Empfang der Benutzereingabe durch Umbauen eines gesamten dreidimensionalen massiven Modellvisualisierung-Datensatzes auf dem Kundengerät (120), der veraltet ist.

7. Verfahren nach einem der Ansprüche 1 bis 6, weiterhin aufweisend:
Anzeigen der massiven Modellvisualisierungen für die Fahrzeuge auf den Kundengeräten (120) unter Verwendung der dreidimensionalen massiven Modellvisualisierung-Datensätze (108).

8. Verfahren nach einem der Ansprüche 1 bis 7, weiterhin aufweisend:
Anzeigen einer massiven Modellvisualisierung für ein gegebenes Fahrzeug aus der Liste von Fahrzeugen, die anzeigbar sind, unter Verwendung der dreidimensionalen massiven Modellvisualisierung-Datensätze (108), die in der Gruppe von Repositorien (116) in dem Computersystem (104) gespeichert sind, um dadurch eine gegebene Konfiguration eines Objekts aus der Liste von Fahrzeugen anzuzeigen.

9. Verfahren nach einem der Ansprüche 1 bis 8, wobei der dreidimensionale massive Modellvisualisierung-Datensatz in den dreidimensionalen massiven Modellvisualisierung-Datensätzen ein Beispiel eines Fahrzeugs repräsentiert.

10. Verfahren nach einem der Ansprüche 7 bis 9, wobei der Schritt eines Anzeigens von dreidimensionalen massiven Modellvisualisierung-Datensätzen auf einem Kundengerät (120) aufweist:
Anzeigen der Fahrzeugliste von anzeigbaren Fahrzeugen, die auf dem Kundengerät (120) sind;
Herunterladen eines dreidimensionalen massiven Modellvisualisierung-Datensatzes in den dreidimensionalen massiven Modellvisualisierung-Datensätzen, der einem aus der Fahrzeugliste ausgewählten Fahrzeug entspricht, aus der Gruppe von Repositorien (116) in dem Computersystem (104); und
Anzeigen einer massiven Modellvisualisierung des Fahrzeugs unter Verwendung des zu dem Kundengerät (120) heruntergeladenen dreidimensionalen massiven Modellvisualisierung-Datensatzes.

11. Verfahren nach Anspruch 10, weiterhin aufweisend:
selektives Aktualisieren des dreidimensionalen massiven Modellvisualisierung-Datensatzes vor Anzeigen der massiven Modellvisualisierung des Fahrzeugs unter Verwendung des zu dem Kundengerät heruntergeladenen dreidimensionalen massiven Modellvisualisierung-Datensatzes, wenn der dreidimensionale massive Modellvisualisierung-Datensatz veraltet ist und wenn eine Benutzereingabe empfangen wird, um den dreidimensionalen massiven Modellvisualisierung-Datensatzes zu aktualisieren.

12. System (100) zum Verwalten von dreidimensionalen massiven Modellvisualisierung-Datensätzen, die dreidimensionale Modelle von Komponenten von Fahrzeugen aufweisen, wobei das System (110) aufweist:
ein Computersystem (104); und
einen Datensatz-Manager (112) in dem Computersystem (104), wobei der Datensatz-Manager (112) konfiguriert ist zum:
Zusammenstellen (400) einer Fahrzeugliste von Fahrzeugen, für die dreidimensionale massive Modellvisualisierung-Datensätze (108) zu bauen sind, wobei die Liste von Fahrzeugen eine Bauliste ist, die die Fahrzeuge mittels Modell, Liniennummer, Komponentennummern, Ort von Visualisierungsdaten, Verteilungsinformationen oder Umbauhäufigkeit identifiziert;
automatisches Bauen (402) der dreidimensionalen massiven Modellvisualisierung-Datensätze (108) für Fahrzeuge in der Fahrzeugliste unter Verwendung des Computersystems (104) durch Importieren der Bauliste und Erzeugen eines Datensatzes für jedes Fahrzeug in der Bauliste;
Speichern (404) der dreidimensionalen massiven Modellvisualisierung-Datensätze (108) in einer Gruppe von Repositorien (116);
Verteilen (406) der dreidimensionalen massiven Modellvisualisierung-Datensätze (108) zum Anzeigen von massiven Modellvisualisierungen für die Fahrzeuge unter Verwendung der dreidimensionalen massiven Modellvisualisierung-Datensätze (108) auf Kundegeräten (120);
Empfangen einer Benutzereingabe einer Anfrage zum selektiven Aktualisieren eines dreidimensionalen massiven Modellvisualisierung-Datensatzes in den dreidimensionalen massiven Modellvisualisierung-Datensätzen (108), wenn der dreidimensionale massive Modellvisualisierung-Datensatz veraltet ist, und
Aktualisieren des an der Gruppe von Repositorien vorhandenen dreidimensionalen massiven Modellvisualisierung-Datensatzes, wobei
die Bestimmung, dass der dreidimensionale massive Modellvisualisierung-Datensatz veraltet ist, aufweist: Bestimmen, ob sich ein Ort eines Modells geändert hat oder ob sich eine Konfiguration von Fahrzeugen geändert hat, und wobei
das automatische Bauen zu einer ausgewählten Zeit durchgeführt wird, wenn eine geringe Nutzung von Prozessorressourcen auftritt.

13. System (100) für dreidimensionale massive Modellvisualisierung-Datensätze nach Anspruch 12, weiterhin aufweisend:
ein Kundengerät (120) am Ort eines Benutzers, der einen dreidimensionalen massiven Modellvisualisierung-Datensatz in den dreidimensionalen massiven Modellvisualisierung-Datensätzen (108) aus der Gruppe von Repositorien (116) anfordert, um eine dreidimensionale massive Modellvisualisierung für die Fahrzeuge anzuzeigen.

14. System (100) für dreidimensionale massive Modellvisualisierung-Datensätze nach Anspruch 13, wobei der dreidimensionale massive Modellvisualisierung-Datensatz in den dreidimensionalen massiven Modellvisualisierung-Datensätzen (108) ein Beispiel eines Fahrzeugs repräsentiert.

## Revendications

1. Procédé de gestion d'ensembles de données de visualisation de modèle tridimensionnel massif (108) comprenant des modèles tridimensionnels de pièces de véhicules, le procédé comprenant :
la compilation (400), en utilisant un gestionnaire d'ensemble de données (112) dans un système informatique (104), d'une liste de véhicules pour lesquels les ensembles de données de visualisation de modèle tridimensionnel massif (108) doivent être construits, dans lequel la liste de véhicules est une liste de construction qui identifie les véhicules par modèle, numéro de ligne, numéros de pièces, emplacement des données de visualisation, informations de distribution ou fréquence de reconstruction ;
la construction automatique (402) des ensembles de données de visualisation de modèle tridimensionnel massif (108) pour les véhicules dans la liste en utilisant le système informatique (104) en important la liste de construction et en créant un ensemble de données pour chaque véhicule dans la liste de construction ;
le stockage (404) des ensembles de données de visualisation de modèle tridimensionnel massif (108) dans un groupe de référentiels (116) ;
la distribution (406) des ensembles de données de visualisation de modèle tridimensionnel massif (108) pour afficher des visualisations de modèle massif pour les véhicules en utilisant les ensembles de données de visualisation de modèle tridimensionnel massif (108) sur des dispositifs clients (120) ;
la réception d'une entrée d'utilisateur d'une demande pour la mise à jour sélective d'un ensemble de données de visualisation de modèle tridimensionnel massif des ensembles de données de visualisation de modèle tridimensionnel massif (108) lorsque l'ensemble de données de visualisation de modèle tridimensionnel massif est obsolète ; et
la mise à jour sélective de l'ensemble de données de visualisation de modèle tridimensionnel massif situé sur le groupe de référentiels, dans lequel
la détermination de l'ensemble de données de visualisation de modèle tridimensionnel massif comme étant obsolète comprend le fait de déterminer si un emplacement d'un modèle a changé ou si une configuration de véhicules a changé, et dans lequel
la construction automatique est effectuée à une heure sélectionnée où une faible utilisation des ressources d'un processeur a lieu.

2. Procédé selon la revendication 1 comprenant en outre :
la mise à jour sélective (408) de l'ensemble de données de visualisation de modèle tridimensionnel massif des ensembles de données de visualisation de modèle tridimensionnel massif (108) lorsque l'ensemble de données de visualisation de modèle tridimensionnel massif est obsolète lorsque l'entrée d'utilisateur est reçue à travers la mise à jour de l'ensemble de données de visualisation de modèle tridimensionnel massif situé sur un dispositif client (120) en téléchargeant des informations pour reconstruire l'ensemble de données de visualisation de modèle tridimensionnel massif.

3. Procédé selon la revendication 2 comprenant en outre :
la mise à jour de l'ensemble de données de visualisation de modèle tridimensionnel massif situé sur le dispositif client (120) lorsque l'entrée d'utilisateur est reçue en téléchargeant la totalité d'un ensemble de données de modèle tridimensionnel massif le plus récent à partir d'un référentiel (116).

4. Procédé selon la revendication 2 comprenant en outre :
la mise à jour de l'ensemble de données de visualisation de modèle tridimensionnel massif situé sur le dispositif client (120) lorsque l'entrée d'utilisateur est reçue en reconstruisant une première partie de l'ensemble de données de visualisation de modèle tridimensionnel massif sur le dispositif client qui est obsolète tandis qu'une deuxième partie de l'ensemble de données de visualisation de modèle tridimensionnel massif est inchangée.

5. Procédé selon l'une quelconque des revendications 1 à 4 comprenant en outre :
la mise à jour sélective (408) de l'ensemble de données de visualisation de modèle tridimensionnel massif des ensembles de données de visualisation de modèle tridimensionnel massif (108) lorsque l'ensemble de données de visualisation de modèle tridimensionnel massif est obsolète lorsque l'entrée d'utilisateur est reçue par la mise à jour de l'ensemble de données de visualisation de modèle tridimensionnel massif sur un dispositif client (120) par au moins un parmi le fait de masquer un premier groupe de modèles ou l'ajout d'un deuxième groupe de modèles.

6. Procédé selon la revendication 2 comprenant en outre :
la mise à jour de l'ensemble de données de visualisation de modèle tridimensionnel massif situé sur le dispositif client (120) lorsque l'entrée d'utilisateur est reçue en reconstruisant la totalité de l'ensemble de données de visualisation de modèle tridimensionnel massif de données sur le dispositif client (120) qui est obsolète.

7. Procédé selon l'une quelconque des revendications 1 à 6 comprenant en outre :
l'affichage des visualisations de modèle massif pour les véhicules sur les dispositifs clients (120) en utilisant les ensembles de données de visualisation de modèle tridimensionnel massif (108).

8. Procédé selon l'une quelconque des revendications 1 à 7 comprenant en outre :
l'affichage d'une visualisation de modèle massif pour un véhicule donné à partir de la liste de véhicules qui sont affichables en utilisant les ensembles de données de visualisation de modèle tridimensionnel massif (108) stockés dans le groupe de référentiels (116) dans le système informatique (104), pour afficher ainsi une configuration donnée d'un objet à partir de la liste de véhicules.

9. Procédé selon l'une quelconque des revendications 1 à 8, dans lequel l'ensemble de données de visualisation de modèle tridimensionnel massif des ensembles de données de visualisation de modèle tridimensionnel massif représente une instance d'un véhicule.

10. Procédé selon l'une quelconque des revendications 7 à 9, dans lequel l'étape de l'affichage d'ensembles de données de visualisation de modèle tridimensionnel massif sur un dispositif client (120) comprend :
l'affichage de la liste de véhicule de véhicules affichables qui se trouvent sur le dispositif client (120) ;
le téléchargement d'un ensemble de données de visualisation de modèle tridimensionnel massif des ensembles de données de visualisation de modèle tridimensionnel massif correspondant à un véhicule choisi dans la liste de véhicules à partir du groupe de référentiels (116) dans le système informatique (104) ; et
l'affichage d'une visualisation de modèle massif du véhicule en utilisant l'ensemble de données de visualisation de modèle tridimensionnel massif téléchargé sur le dispositif client (120).

11. Procédé selon la revendication 10 comprenant en outre :
la mise à jour sélective de l'ensemble de données de visualisation de modèle massif tridimensionnel avant l'affichage de la visualisation de modèle massif du véhicule en utilisant l'ensemble de données de visualisation de modèle tridimensionnel massif téléchargé sur le dispositif client lorsque l'ensemble de données de visualisation de modèle tridimensionnel massif est obsolète et lorsqu'une entrée d'utilisateur est reçue pour mettre à jour l'ensemble de données de visualisation de modèle tridimensionnel massif.

12. Système (100) pour gérer des ensembles de données de visualisation de modèle tridimensionnel massif comprenant des modèles tridimensionnels de pièces de véhicules, le système (100) comprenant :
un système informatique (104) ; et
un gestionnaire d'ensemble de données (112) dans le système informatique (104), dans lequel le gestionnaire d'ensemble de données (112) est configuré pour :
compiler (400) une liste de véhicules de véhicules pour lesquels des ensembles de données de visualisation de modèle tridimensionnel massif (108) doivent être construits, dans lequel la liste de véhicules est une liste de construction qui identifie les véhicules par modèle, numéro de ligne, numéros de pièces, emplacement des données de visualisation, informations de distribution ou fréquence de reconstruction ;
construire automatiquement (402) les ensembles de données de visualisation de modèle tridimensionnel massif (108) pour des véhicules dans la liste de véhicules en utilisant le système informatique (104) en important la liste de construction et en créant un ensemble de données pour chaque véhicule dans la liste de construction ;
stocker (404) les ensembles de données de visualisation de modèle tridimensionnel massif (108) dans un groupe de référentiels (116) ;
distribuer (406) les ensembles de données de visualisation de modèle tridimensionnel massif (108) pour afficher des visualisations de modèle massif pour les véhicules en utilisant les ensembles de données de visualisation de modèle tridimensionnel massif sur des dispositifs clients (120) ;
recevoir une entrée d'utilisateur d'une demande pour la mise à jour sélective d'un ensemble de données de visualisation de modèle tridimensionnel massif des ensembles de données de visualisation de modèle tridimensionnel massif (108) lorsque l'ensemble de données de visualisation de modèle tridimensionnel massif est obsolète, et
mettre à jour l'ensemble de données de visualisation de modèle tridimensionnel massif situé sur le groupe de référentiels, dans lequel
la détermination de l'ensemble de données de visualisation de modèle tridimensionnel massif comme étant obsolète comprend le fait de déterminer si un emplacement d'un modèle a changé ou si une configuration de véhicules a changé, et dans lequel
la construction automatique est effectuée à une heure sélectionnée où une faible utilisation des ressources d'un processeur a lieu.

13. Système (100) d'ensembles de données de visualisation de modèle tridimensionnel massif selon la revendication 12 comprenant en outre :
un dispositif client (120) local pour un utilisateur qui demande un ensemble de données de visualisation de modèle tridimensionnel massif des ensembles de données de visualisation de modèle tridimensionnel massif (108) à partir du groupe de référentiels (116) pour afficher une visualisation de modèle tridimensionnel massif pour les véhicules.

14. Système (100) d'ensembles de données de visualisation de modèle tridimensionnel massif selon la revendication 13, dans lequel l'ensemble de données de visualisation de modèle tridimensionnel massif des ensembles de données de visualisation de modèle tridimensionnel massif (108) représente une instance d'un véhicule.
